# EUROPÄISCHE PATENTSCHRIFT

(11) **EP 0 784 560 B1**
(45) Veröffentlichungstag und Bekanntmachung des Hinweises auf die Patenterteilung: **04.11.1998**
(21) Anmeldenummer: 95928436.5
(22) Anmeldetag: 17.08.1995
(51) Int. Cl.: B62D 57/024, G05D 1/02

(54) **MOBILES TRANSPORT- UND HANDHABUNGSSYSTEM SOWIE VERFAHREN ZUR STEUERUNG DER BEWEGUNG EINES SOLCHEN SYSTEMS ODER ZUR BESTIMMUNG DER POSITION WENIGSTENS EINER TRANSPORTEINRICHTUNG EINES SOLCHEN SYSTEMS**
MOBILE CONVEYOR AND HANDLING SYSTEM AND METHOD OF CONTROLLING THE MOTION OF SUCH A SYSTEM OR OF DETERMINING THE POSITION OF AT LEAST ONE CONVEYOR DEVICE IN SUCH A SYSTEM
SYSTEME MOBILE DE TRANSPORT ET DE MANIPULATION ET PROCEDE PERMETTANT DE MODULER LE MOUVEMENT D'UN SYSTEME DE CE TYPE OU DE DETERMINER LA POSITION D'AU MOINS UN DISPOSITIF DE TRANSPORT D'UN SYSTEME DE CE TYPE

(30) Priorität: 19.08.1994 DE 4429501
(43) Veröffentlichungstag der Anmeldung: 23.07.1997
(73) Patentinhaber: YBERLE, Hans, 92318 Neumarkt (DE); Waffler, Michael, Dipl.-Ing., 92358 Seubersdorf (DE); Regionaler Förderfonds für Innovationen und junge Technologieunternehmen GmbH & Co. KG, 93057 Regensburg (DE); Bayernkapital Risikobeteiligungs GmbH, 84028 Landshut (DE)
(72) Erfinder: YBERLE, Hans, D-92318 Neumarkt (DE); WAFFLER, Michael, D-92358 Seubersdorf (DE)
(74) Vertreter: Graf, Helmut, Dipl.-Ing.
(86) Internationale Anmeldenummer: DE9501086
(87) Internationale Veröffentlichungsnummer: WO9605997

(56) Entgegenhaltungen:
- EP-A- 0 430 161
- FR-A- 2 607 093
- PROCEEDINGS '1994 IEEE INTERN. CONFERENCE ON ROBOTICS AND AUTOMATION' 8.Mai 1994 , IEEE COMPUTER SOCIETY PRESS , LOS ALAMITOS, CALIFORNIA XP 000478473 209110 siehe Seite 1251, linke Spalte, Zeile 1 - Seite 1252, Zeile 30; Abbildung 4

## Beschreibung

Die Erfindung bezieht sich auf ein mobiles Transport- und Handhabungssystem gemäß Oberbegriff Patentanspruch 1 sowie auf ein Verfahren gemäß Oberbegriff Patentanspruch 14.

Bekannt ist eine für Arbeitsgeräte bestimmte Transporteinrichtung, die mit einer schreitenden Bewegung auf einen Untergrund bewegbar ist (EP 0 084 012).

Diese bekannte Transporteinrichtung besteht aus zwei starren Rahmenteilen oder Polygonen, an denen jeweils mehrere von Saugnäpfen gebildete Fuß- und Halteelemente vorgesehen sind. Eines der beiden Polygone bildet dabei ein äußeres Polygon und eines der beiden Polygone ein inneres Polygon. Das innere Polygon befindet sich innerhalb der äußeren Abmessungen des äußeren Polygons und ist dabei am äußeren Polygon in einer Achsrichtung verschiebbar geführt. Für die schreitende Bewegung werden die Polygone seitlich nacheinander relativ zueinander bewegt, und zwar in Achrichtung dieser Führung.

Nachteilig ist bei der bekannten Transporteinrichtung u.a., daß das äußere Polygon relativ große Abmessungen aufweist, um den erforderlichen Schreitweg zu erhalten. Aus diesem Grunde ist es auch unmöglich oder zumindest äußerst schwierig, die bekannte Transporteinrichtung auf beengtem Raum zu bewegen und/oder eine Richtungsänderung vorzunehmen. Diese ist im bekannten Fall nur durch Schwenken der Polygone um eine senkrecht zum Untergrund verlaufende Achse möglich.

In der älteren, nicht vorveröffentlichten DE-A-43 13 719 ist weiterhin eine Transporteinrichtung vorgeschlagen, die diesen Nachteil vermeidet und bei einem minimalen Aufwand eine hohe Mobilität auch auf engstem Raum sowie kleine Abmessungen besitzt. Die Transporteinrichtung besteht aus wenigstens drei Schreitelementen sowie aus wenigstens drei Stellgliedern, die jeweils auf zwei Schreitelemente einwirken bzw. diese verbinden, so daß sich insgesamt eine polygonartige Anordnung ergibt, deren Seiten von den Stellgliedern gebildet sind, die durch ihren Bewegungshub eine Verkürzung oder Verlängerung der jeweiligen Seite bewirken und die zumindest teilweise jeweils gelenkig mit den Schreitelementen verbunden sind.

Vielfach ist es erforderlich, eine derartige Transporteinrichtung auf einen Untergrund auf einer vorgegebenen Bahn oder auf einem vorgegebenen Weg und in einer vorgegebenen Orientierung sehr exakt zu bewegen und/oder die jeweilige Position und/oder Orientierung der Transporteinrichtung genau zu bestimmen.

Aufgabe der vorliegenden Erfindung ist es, ein mobiles Transport- und Handhabungssystem aufzuzeigen, welches wenigstens eine auf einem Untergrund bewegbare bzw. roboterartig bewegbare Transporteinrichtung aufweist und bei dem die jeweilige Position und Orientierung dieser Transporteinrichtung zu jedem gewünschten Zeitpunkt exakt bestimmbar ist.

Zur Lösung dieser Aufgabe ist ein Transport- und Handhabungssystem entsprechend dem kennzeichnenden Teil des Patentanspruches 1 ausgebildet. Ein Verfahren zur positionsgenauen Bewegung der wenigstens einen Transporteinrichtung des Systems oder der genauen Bestimmung der Position und/oder Orientierung dieser Transporteinrichtung ist erfindungsgemäß entsprechend dem kennzeichnenden Teil des Patentanspruches 14 ausgebildet.

Bei der Erfindung erfolgt die Bestimmung der Position und/oder Orientierung der Transporteinrichtung während ihrer Bewegung durch Messung der Position und Orientierung realtiv zu einem ortsfest am Untergrund vorgesehenen Hilfselement, welches bei der fortschreitenden Bewegung der Transporteinrichtung von Zeit zu Zeit nachgeführt wird und somit innerhalb einer vorgegebenen maximalen Reichweite bezogen auf die Transporteinrichtung verbleibt. Durch Meßmittel, die auf der Transporteinrichtung und/oder auf dem Hilfselement vorgesehen sind, wird bei der fortschreitenden Bewegung der Transporteinrichtung deren Position und Orientierung relativ zum Hilfselement gemessen und bestimmt. Nach dem Nachführen des Hilfselementes wird dessen neue Position aufgrund der bekannten Position der Transporteinrichtung und/oder aufgrund einer bekannten Position eines weiteren Hilfselementes neu bestimmt, so daß diese neue Position des nachgeführten Hilfselementes dann als neuer Bezugspunkt bei der Bestimmung der Position und/oder Orientierung der Transporteinrichtung verwendet wird.

Bevorzugt wird das System so eingesetzt, daß am Anfang der Fortschreitbewegung der Transporteinrichtung deren Position und/oder die Position des Zugehörigen Hilfselementes beispielsweise koordinatenmäßig genau bestimmt und diese Werte dann in eine die Meßsignale der wenigstens einen Meßeinrichtung auswertende Meß- oder Steuerelektronik, beispielsweise in einen Computer eingegeben werden.

Im einfachsten Fall weist das System wenigstens eine Transporteinrichtung auf, der dann wenigstens ein Hilfselement zugeordnet ist. Das System kann aber auch mehrere Transporteinrichtungen besitzen, die jeweils wenigstens ein zugeordnetes Hilfselement aufweisen, oder aber mehreren Transporteinrichtungen ist nur wenigstens ein Hilfselement zugeordnet, und zwar beispielsweise in der Form, daß die Position und/oder Orientierung sämtlicher Transporteinrichtungen jeweils relativ zu dem einen Hilfselement bestimmt werden oder aber in der Form, daß das Hilfselement nur einer Transporteinrichtung zugeordnet ist und die Position und/oder Orientierung der übrigen Transporteinrichtungen jeweils durch Meßeinrichtungen relativ zu der Position und Orientierung dieser einen Transporteinrichtung bestimmt werden.

Weiterbildungen der Erfindung sind Gegenstand der Unteransprüche.

Die Erfindung wird im Folgenden anhand der Figuren an Ausführungsbeispielen näher erläutert. Es zeigen:

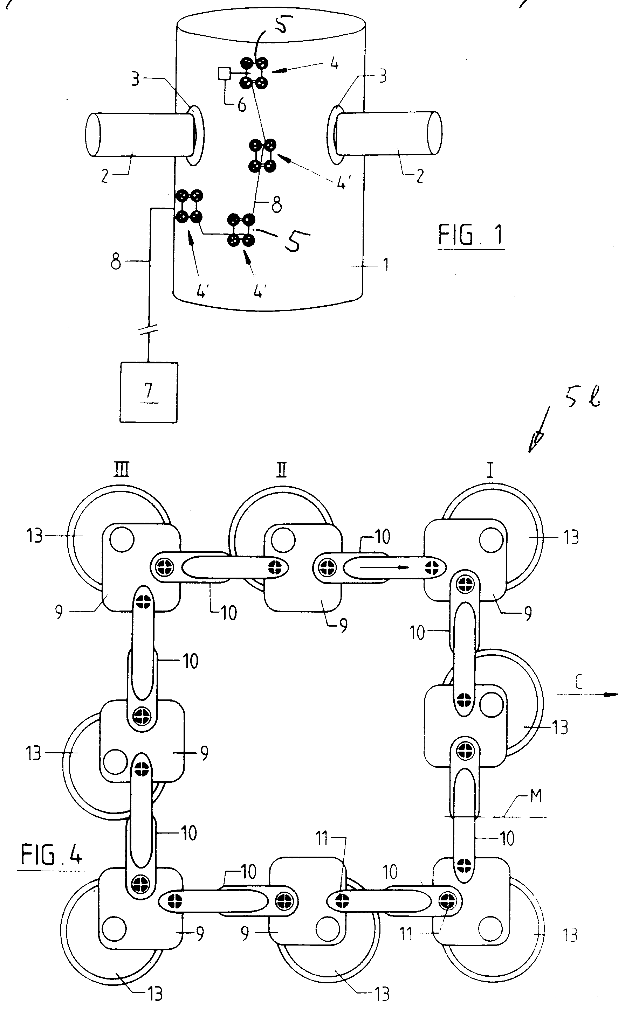

- Fig. 1: in schematischer Darstellung und in Seitenansicht einen Druckzylinder eines Kernkraftwerkes, zusammen mit einer zur Untersuchung dieses Druckzylinders im Strahlungsbereich angeordneten Meßeinrichtung mit mehreren Transporteinrichtungen gemäß der Erfindung;
- Fig. 2: in vereinfachter, vergrößerter Darstellung und in Draufsicht eine Transporteinrichtung gemäß der Erfindung;
- Fig. 3: eine Seitenansicht der Transporteinrichtung der Fig. 2;
- Fig. 4: in ähnlicher Darstellung wie Fig. 2 eine weitere Ausführungsform der erfindungsgemäßen Transporteinrichtung;
- Fig. 5: in schematischer Darstellung und in Draufsicht zwei Transporteinrichtungen gemäß der Erfindung, und zwar in verschiedenen Positionen relativ zueinander bei einer in einer Richtung fortschreitenden Bewegung;
- Fig. 6: in ähnlicher Darstellung wie Fig. 5 ein insgesamt drei Transporteinrichtungen aufweisendes System, ebenfalls in verschiedenen Positionen während einer in einer Achsrichtung fortschreitenden Bewegung;
- Fig. 7: in vereinfachter Darstellung und in Draufsicht eine weitere mögliche Ausführungsform der Erfindung.

In den Figuren ist 1 ein aus Stahl gefertigter Druckzylinder des Reaktors eines Kernkraftwerkes.

Aus Sicherheitsgründen ist es erforderlich, daß dieser Druckzylinder 1, die an den Druckzylinder führenden Leitungen 2 und die zugehörigen Anschlußflansche 3 usw. ständig auf eventuelle Veränderungen, insbesondere auf Material-Risse überprüft werden. Dies ist insofern problematisch, als diese Überprüfung im Strahlungsbereich vorgenommen werden muß.

Für die Überprüfung ist ein Roboter 4 vorgesehen, der im wesentlichen aus einer Transporteinrichtung 5 und einer an dieser Transporteinrichtung vorgesehenen Ultraschall-Untersuchungseinrichtung 6 besteht, mit der der Druckzylinder 1, die Leitungen 2, Flansche 3 usw. auf vorhandene Material-Defekte oder Risse überprüft werden. Die von der Meßeinrichtung 6 gelieferten Signale werden an eine vom Druckzylinder 1 räumlich entfernte und außerhalb des Strahlungsbereiches liegende Station bzw. Kontroll- und Steuereinrichtung 7 übermittelt und dort ausgewertet, aufgezeichnet usw. Von der Kontroll- und Steuereinrichtung 7 aus wird auch die Bewegung des Roboters 4 und damit der Ultraschall-Meßeinrichtung gesteuert. Die Kontroll- und Steuereinrichtung 7 und der Roboter 4 sind über ein Leitungsbündel 8 miteinander verbunden, welche alle erforderlichen elektrischen Leitungen beispielweise zur Übertragung der Meßignale vom Roboter 4 an die Kontroll- und Steuereinrichtung 7, zur Steuerung der nachfolgend noch näher beschriebenen Elemente des Roboters, für die Stromversorgung des Roboters usw. sowie auch Mediem- oder Schlauchleitungen (Druckluft-Leitungen, Vakuum-Leitungen, Hydraulikleitungen usw.) enthält. Durch die Vielzahl der elektrischen Leitungen sowie der Schlauchleitungen weist das Leitungsbündel 8 ein relativ hohes Gewicht je laufenden Meter auf. Aus diesem Grunde sind zusätzlich zum Hauptroboter 4 Hilfsroboter 4' vorgesehen, die ebenfalls jeweils eine Transporteinrichtung 5 aufweisen. Mit den Transporteinrichtungen sind der Roboter 4 und die Hilfsroboter 4', die als Träger für das Leitungsbündel 8, d.h. zum Halten und Nachführen des Leitungsbündels 8 dienen, auch an den vertikalen Außenflächen des Druckzylinders 1 sowie an den wegführenden Rohrleitungen 2 bewegbar, und zwar gesteuert von der Kontroll- und Steuereinrichtung 7 bzw. einem dort vorgesehenen Rechner in der Weise, daß der Roboter 4 an jede zu überprüfende Stelle des Druckzylinders 1 sowie der Rohrleitungen 2 bewegbar ist.

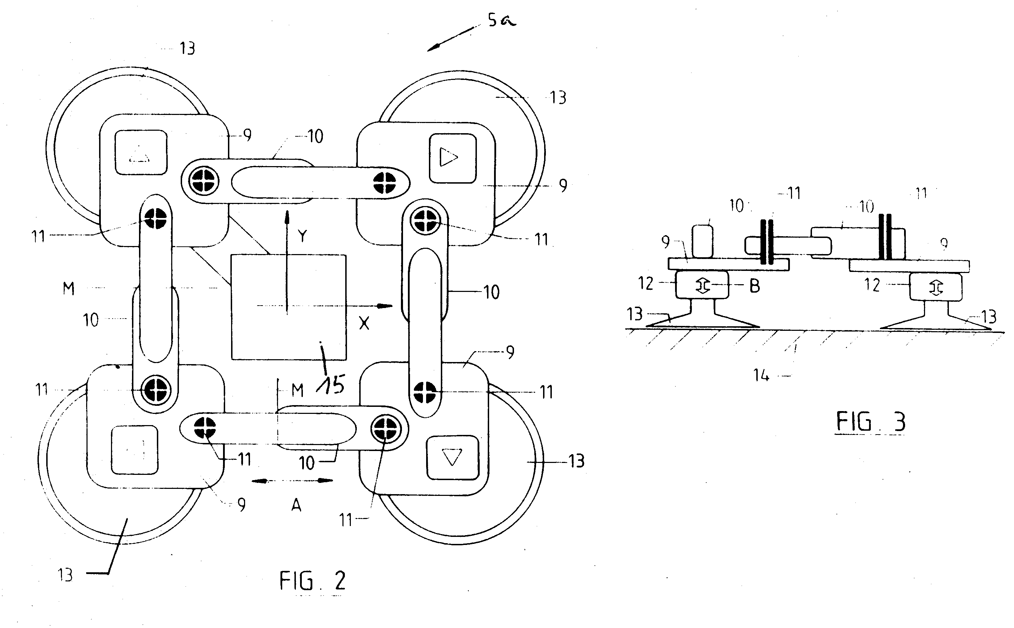

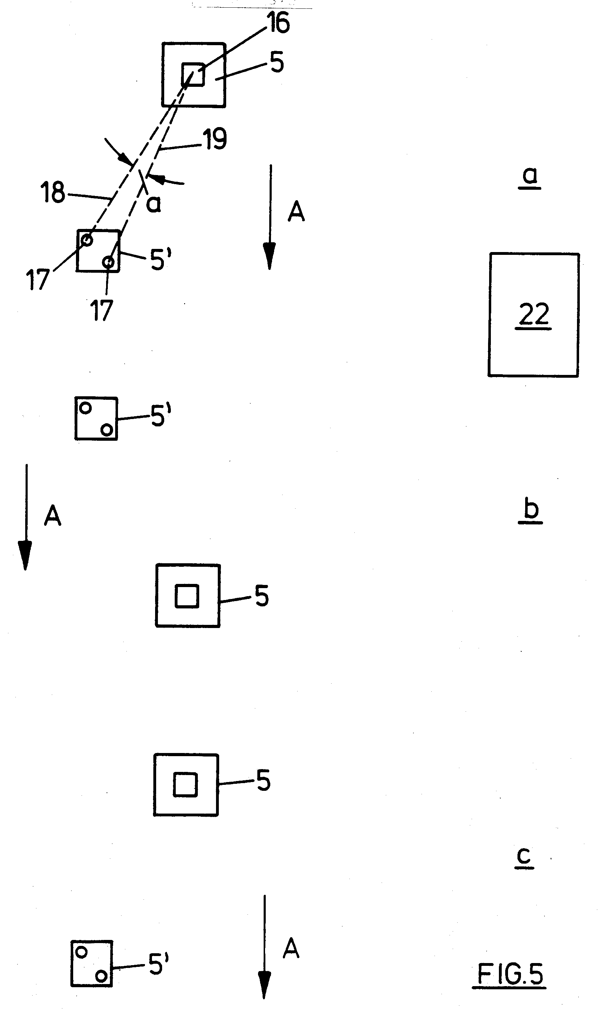

Die jeweilige Transporteinrichtung 5 ist als Schreitwerk ausgebildet und kann eine unterschiedliche Ausbildung aufweisen. In den Figuren 2 und 3 sind zwei mit 5a und 5b bezeichnete Ausführungsformen größer im Detail dargestellt.

Die Transporteinrichtung 5a besteht im wesentlichen aus vier in der Fig. 2 plattenartig dargestellten Trägern 9, die über vier Stellglieder 10 zu einem Viereck miteinander verbunden sind, wobei jeder Träger 9 im Bereich einer Ecke dieses Vierecks vorgesehen ist. Die Stellglieder 10 sind als individuell ansteuerbare Linear-Antriebe ausgebildet und jeweils beidendig mittels eines Gelenkes 11 an zwei in Umfangsrichtung des Vierecks aufeinanderfolgenden Trägern 9 angelenkt, so daß die vier Träger 4 über die Stellglieder 10 und die Gelenke 11 miteinander verbunden sind. Die Stellglieder 10 sind so ausgebildet und ansteuerbar, daß innerhalb eines vorgegebenen maximalen Stellbereichs bzw. Bewegungshubes jeder beliebige Abstand zwischen zwei Trägern 9 durch das zwischen diesen Trägern vorgesehene Stellglied eingestellt werden kann. Die Gelenke 11 sind bei der dargestellten Ausführungsform so ausgebildet, daß sie eine gelenkige Verbindung zwischen dem jeweiligen Ende eines Stellgliedes 10 und dem Träger 9 in allen drei senkrecht zueinander verlaufenden Raumachsen ermöglichen, d.h. die Gelenke 11 sind beispielsweise Kugelgelenke.

Die Stellglieder 10 sind z.B. elektrische, pneumatische oder hydraulische Linearantriebe. Mit M ist eine gedachte vertikale Mittelebene bezeichnet, die von der Achse bzw. Bewegungsachse des betreffenden Stellgliedes 10 senkrecht geschnitten wird. Die beiden über dieses Stellglied miteinander verbundenen Träger 9 sind beidseitig von dieser Mittelachse M angeordnet.

Wie Fig. 3 zeigt, ist an jedem Träger 9 weiterhin ein Hubelement 12 vorgesehen, welches an seinem unteren, über die Unterseite des Trägers 9 wegstehenden Ende einen Standfuß in Form eines Haftelementes 13 trägt.

Mit Hilfe der Hubelemente 12, von denen jeweils nur eines für jedes Haftelement 13 vorgesehen ist, ist jedes Haftelement 13 individuell anhebbar und absenkbar, wie dies in der Fig. 3 mit dem Doppelpfeil B angedeutet ist. Bei der dargestellten Ausführungsform sind die Haftelemente Saugnäpfe, die gesteuert mit einem Unterdruck beaufschlagt und auch wieder belüftet werden können. Die Haftelemente 13 können auch andersartig ausgestaltet sein, beispielweise als Elektromagneten, die zum Halten eines Haftelementes 13 aktiviert und zum Lösen dieses Haftelementes deaktiviert werden.

Durch eine entsprechende Ansteuerung der Stellglieder 10, der Hubelemente 12 und Haftelemente 13 ist eine schreitende Bewegung jeder Transporteinrichtung 5a in beliebigen Richtungen möglich, wobei bei jedem Bewegungsschritt für diese schreitende Bewegung vorzugsweise stets drei Haftelemente 13 auf dem Untergrund 14, der beispielsweise von der Außenfläche des Druckzylinders 1 oder einer Rohrleitung 2 gebildet ist, festgesaugt bzw. festgelegt sind, während ein Haftelement 13 belüftet und durch dessen Hubelement 12 angehoben ist. Durch Betätigen der Stellglieder 10 des diesem freigegebenen Haftelement 13 zugeordneten Trägers 9 wird dieser bzw. dessen Haftelement 13 von den übrigen Haftelementen wegbewegt, d.h. es führt einen Schritt aus. Anschließend werden zeitlich nacheinander die übrigen Träger 9 durch Betätigen der jeweiligen Stellglieder 10, des jeweiligen Hubelementes 12 und Haftelemtes 13 nachbewegt, so daß eine raupenartige, fortschreitende Bewegung der Transporteinrichtung erhalten wird. Durch unterschiedliche Ansteuerung der Stellglieder 10 kann diese Bewegung in jeder Richtung erfolgen, und zwar trotz der liniaren Bewegung der Stellglieder entweder auf einem geraden oder auf einem gekrümmten Weg.

Der eigentliche Roboter 4 ist auf einer Plattform 15 vorgesehen, die bei der dargestellten Ausführungsform über eine Schlittenanordnung an einem der Träger 9 gehalten ist. Mit Hilfe der Schlittenanordnung und nicht dargestellter Antriebe ist die Plattform 15 und die dort vorgesehene Ultraschall-Meßeinrichtung 6 in zwei Achsen einer parallel zum Untergrund 14 verlaufenden Ebene kontinuierlich oder in kleinen Schritten einstellbar, wie dies in der Fig. 2 mit den Achsen X und Y angedeutet ist. Der maximale Bewegungshub, der mit der Schlittenanordnung in jeder Achsrichtung (beispielsweise durch eine Vielzahl von kleinen Bewegungsschritten) möglich ist, ist gleich oder etwas größer als der maximale Bewegungshub bzw. Schritt der Stellglieder 10.

Durch diese Einstellung der Meßeinrichtung 6 in den beiden Achsen X und Y sind beim Bewegen der Transporteinrichtung 5a entlang des Untergrundes 14 für den jeweiligen Träger 9 bzw. das zugehörige Haftelement 14 große Schritte möglich, um auf diese Weise trotz der sukzessiven Bewegung der Träger 9 und Haftelemente 13 eine ausreichend hohe Bewegungsgeschwindigkeit für die Transportvorrichtung 5a zu erreichen. Durch die Fein-Positionierung der Meßeinrichtung 6 durch die Schlittenanordnung kann dennoch auch in einem sehr feinen Raster jeder gewünschte Punkt von der Meßeinrichtung erfaßt werden.

Bei den Hilfsroboters 4' ist auf der Plattform 15, die in diesem Fall fest und nicht über eine Schlittenanordnung mit einem der Träger 9 verbunden ist, eine vorzugsweise schwenkbare Halterung für das Leitungsbündel 8 vorgesehen.

Die Fig. 4 zeigt in einer Darstellung wie Fig. 2 als weitere Ausführungsform eine Transporteinrichtung 5b, die sich von der Transporteinrichtung im wesentlichen nur dadurch unterscheidet, daß insgesamt acht Träger 9 vorgesehen sind, die jeweils wiederum ein Hubelement 12 mit einem Haftelement 13 aufweisen und die über die Stellglieder 10 und die Gelenke 11 gelenkig zu einem geschlossenen Polygon miteinander verbunden sind. Auch bei dieser Ausführungsform sind sämtliche Stellglieder 10, Hubelemente 12 und Haftelemente 13 individuell ansteuerbar, und zwar die Stellglieder 10 wiederum für die lineare Bewegung in der Achsrichtung der Längserstreckung dieser Stellglieder, wobei innerhalb eines vorgegebenen Hub-bzw. Bewegungsbereiches beliebige Stellungen anfahrbar sind.

Die Transporteinrichtung 5b bietet durch die höhere Anzahl der Haftelemente 13 eine höhere Sicherheit. Darüberhinaus ist auch eine von der Bewegung der Träger bzw. Haftelemente 13 der Transporteinrichtung 5a abweichende Bewegung beispielsweise in der Form möglich, daß bei der Transporteinrichtung 5b für eine geradlinige Bewegung, beispielsweise für eine geradlinige Bewegung in Richtung des Pfeiles C die Träger 9 jeweils in Gruppen weiterbewegt werden, und zwar zunächst die in der Fig. 4 mit I bezeichnete Gruppe der drei rechten Träger 9, dann die Gruppe II der beiden mittleren Träger 9 und schließlich die Gruppe III der drei linken Träger 9.

Abweichend von den vorbeschriebenen Ausführungsformen ist es beispielsweise möglich, zusätzlich zu den Stellgliedern 10 und Hubelementen 12 noch weitere Hubelemente vorzusehen, mit denen die Schwenkbewegung im Bereich der Gelenke 11 gesteuert und/oder Schwenkachsen dieser Gelenke blockiert werden können.

Weiterhin ist es auch möglich, die jeweilige Transporteinrichtung so auszubilden, daß die dortige Anzahl der Träger 9 von der Anzahl dieser Träger bei den beschriebenen Transporteinrichtungen 5a bzw. 5b abweicht.

Ferner ist es möglich, für die Roboter 4 und Hilfsroboter 4' jeweils unterschiedliche Transporteinrichtungen vorzusehen, beispielsweise für den Roboter 4 die Transporteinrichtung 5b und für wenigstens einen Teil der Hilfsroboter 4' die Transporteinrichtung 5a.

In den Figuren 5 - 7 sind verschiene Möglichkeiten dargestellt, um die Roboter 4 bzw. Hilfroboter 4' bei der Bewegung entlang einer zur untersuchenden Fläche, beispielsweise entlange der Oberfläche 14 des Druckzylinders 1 lagegenau zu steuern und/oder die Positionen des Roboters 4 bzw. des Hilfsroboters 4' exakt zu bestimmen.

Das in der Figur 5 wiedergegebene System besteht aus zwei Transporteinrichtungen 5 und 5', die beispielsweise entsprechend den Transporteinrichtungen 5a und 5b ausgebildet sind und von denen die Transporteinrichtung 5 wiederum Bestandteil eines nicht näher dargestellten Roboters 4 ist, während die Transporteinrichtung 5' lediglich als Hilfstransporteinrichtung oder Hilfselement zur Bestimmung der genauen Position dient. Auf der Transporteinrichtung 5 bzw. auf der dortigen Plattform 15 ist zusätzlich zu den Funktionselementen des Roboters 4 auch eine z.B. mit Laserlicht arbeitende, d.h. wenigstens einen Laser aufweisende Meßeinrichtung 16 vorgesehen, die mit Meß-Elementen 17, beispielsweise in Form von Reflektoren auf der Transporteinrichtung 5' zusammenwirkt. Bei der dargestellten Ausführungsform sind auf der Transporteinrichtung 5' zwei Meßelemente 17 vorgesehen, die in einer Achsrichtung parallel zur Zeichenebene der Figur 5, d.h. parallel zu der Ebene 14, auf der sich die Transporteinrichtungen 5 und 5' bewegen, gegeneinander versetzt sind. Die Meßeinrichtung 16 ist in der Lage, die Meßelemente 17 durch Scannen abzutasten (Abtaststrahlen 18 und 19) und hierbei auch den zwischen diesen Abtaststrahlen gebildeten Winkel a sowie die Länge der Abtaststrahlen 18 und 19, d.h. den jeweiligen Abstand zwischen den Meßelementen 17 und der Meßeinrichtung 16 zu messen. Aus den vorgenannten Daten kann die Relativlage zwischen den Transporteinrichtungen 5 und 5' sehr exakt bestimmt werden und damit auch die jeweilige Position und Orientierung der Transporteinrichtung 5 bei einer fortschreitenden Bewegung in Richtung des Pfeiles A.

Die von der Meßeinrichtung 16 erfaßten Daten werden beispielsweise in einem an der Transporteinrichtung 5 vorgesehenen Rechner oder aber bevorzugt in einem ortsfesten Rechner, der Bestandteil einer Steuereinrichtung 22 ist und über eine Datenübertragungsstrecke mit der Transporteinrichtung 5 verbunden ist, in Daten umgerechnet, die die genaue Position und Orientierung festlegen.

Am Beginn der Bewegung weisen die beiden Transporteinrichtungen 5 und 5' eine genau vorgegebene Position auf, d.h. die Transporteinrichtung 5' befindet sich beispielsweise in einer genau vermessenen Position und Orientierung, so daß hieraus auch die Position und Orientierung der Transporteinrichtung 5 bestimmt werden kann. Bei ortsfester Transporteinrichtung 5' wird die Transporteinrichtung 5 beispielsweise in Richtung des Pfeiles A aus der Ausgangsstellung, die in der Figur 5 in der Position a dargestellt ist und in der die Transporteinrichtung 5' seitlich von der Transporteinrichtung 5, aber in Bewegungsrichtung A der Transporteinrichtung 5 voreilend vorgesehen ist, in die in der Figur 5 in der Position b wiedergegebene Position bewegt.

Während dieser Fortschreitbewegung erfolgt ständig ein Messen der Position der Transporteinrichtung 5 relativ zu der ortsfesten bzw. einen ortsfesten Meß- oder Bezugspunkt bildenden Transporteinrichtung 5', so daß zu jedem Zeitpunkt die genaue Lage oder Position der Transporteinrichtung bekannt ist. Hat die Transporteinrichtung 5 die Position b erreicht, wird bei stehender Transporteinrichtung 5 die Transporteinrichtung 5' nachgeführt, d.h. in Richtung des Pfeiles A bewegt, so daß schließlich der in der Figur 5 in der Position c dargestellte, der Ausgangsstellung entsprechende Zustand wieder erreicht ist, in dem die Transporteinrichtung 5' sich seitlich von der Transporteinrichtung 5 und in Bewegungsrichtung A dieser vorauseilend vorgesehen ist. Da die genaue Lage der Transporteinrichtung 5 in der Position b der Figur 5 bekannt ist, kann auch die Lage der nachgeführten Transporteinrichtung 5' in der Position c der Figur 5 neu definiert bzw. bestimmt werden, so daß dann in einem nächsten Schritt bei feststehender Transporteinrichtung 5' wieder die Transporteinrichtung 5 weiterbewegt und aufgrund der bekannten Position oder Koordinaten sowie der bekannten Orientierung der Transporteinrichtung 5' die jeweilige Position der Transporteinrichtung 5 bei diesem nächsten Bewegungsschritt ständig bestimmt werden können.

Bei der vorstehenden Beschreibung wurde der Einfachheit halber davon ausgegangen, daß sich die beiden Transporteinrichtunge 5 und 5' geradlinig in Richtung des Pfeiles A bewegen. Selbstverständlich sind auch Bewegungen auf gekrümmten Bahnen in gleicher Weise möglich, da mit Hilfe der Meßeinrichtung und den zugeordneten Meßelementen 17 auch die jeweilige Orientierung der Transporteinrichtung 5 bzw. 5' erfaßt werden kann. Das Fortbewegen der Transporteinrichtung 5 mit Bestimmung der jeweiligen Position erfolgt schrittweise, wobei in jeweils einem ersten Verfahrensschritt die Transporteinrichtung 5 vorbewegt und in einem zweiten Verfahrensschritt die Transporteinrichtung 5' nachgeführt wird, worauf sich dann wieder der erste Verfahrensschritt anschließt usw.

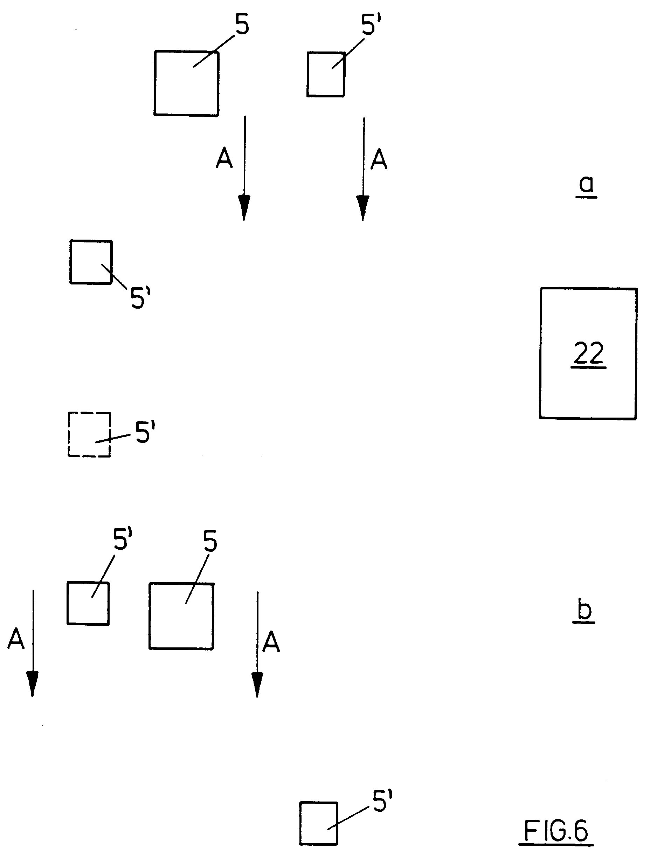

Figur 6 zeigt ein System, welches sich von dem System der Figur 5 im wesentlichen dadurch unterscheidet, daß der Transporteinrichtung 5 zwei Transporteinrichtungen 5' zugeordnet sind, die jeweils die oben beschriebene Funktion der Transporteinrichtung 5' aufweisen und bei der fortschreitenden Bewegung der Transporteinrichtung 5 abwechselnd den ortsfesten Meß- bzw. Orientierungspunkt bilden und so bewegt werden, daß immer dann, wenn sich die Transporteinrichtung 5 an einer als Meßpunkt dienenden, ortsfesten Transporteinrichtung 5' vorbeibewegt hat und bei der in der Figur 5 wiedergegebenen Ausführung ein Anhalten der Transporteinrichtung 5 und ein Nachführend der Transporteinrichtung 5' notwendig ist, bereits die zweite Transporteinrichtung 5' in einer für den Meßvorgang notwendigen nachgeführten Position (seitlich von der Transporteinrichtung 5 und dieser in Bewegungsrichtung vorauseilend) ortsfest vorgesehen ist, so daß durch Umschalten des Meßvorganges von einer Transporteinrichtung 5' auf die andere Transporteinrichtung 5' eine kontinuierliche, fortschreitende Bewegung der Transporteinrichtung 5 möglich ist.

Bei den vorstehend beschriebenen Ausführungsformen wurde davon ausgegangen, daß die aktive Meßeinrichtung 16 auf dem Transportelement 5 vorgesehen ist, welches auch den Roboter bildet. Grundsätzlich ist es aber auch möglich, auf der oder auf den Transporteinrichtungen 5' jeweils wenigstens eine aktive Meßeinrichtung 16 vorzusehen, und zwar anstelle der Meßeinrichtung 16 auf dem Transportelement 5 oder aber zusätzlich hierzu. Weiterhin kann die jeweilige aktive Meßeinrichtung 16 auch unterschiedlich oder abweichend von der obigen Beschreibung ausgeführt sein. Grundsätzlich ist es auch möglich, daß die Meßeinrichtung mit mehreren Meßelementen oder Meßpunkten 17 zusammenwirkt und/oder beispielsweise eine Video-Kamera ist, deren Video-Bild dann zur Bestimmung der relativen Lage zwischen den Transportelementen 5 und 5' entsprechend ausgewertete wird.

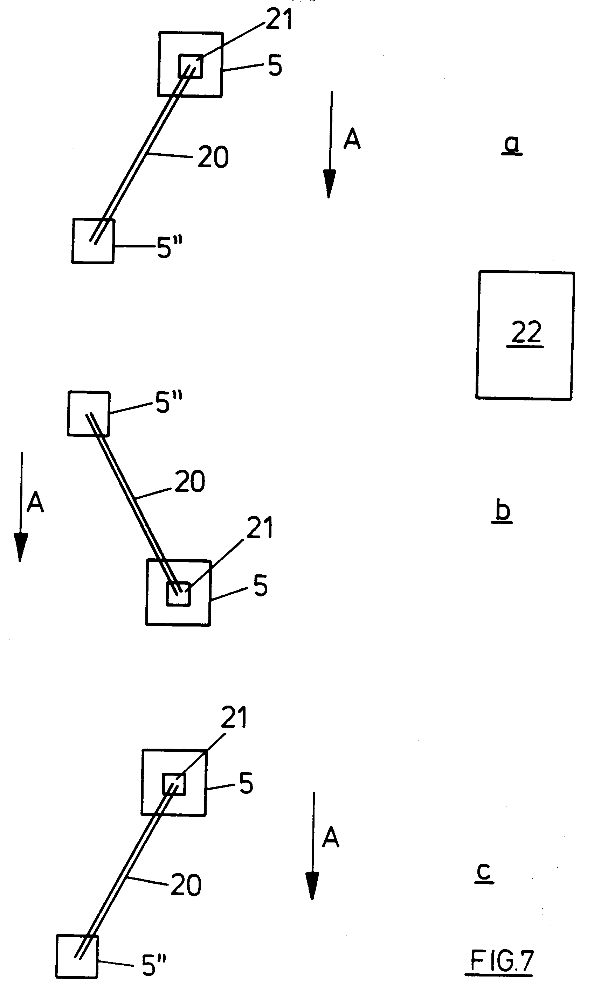

Figur 7 zeigt schließlich eine Ausführungsform, die sich von der Ausführungsform der Figuren 5 und 6 dadurch unterscheidet, daß anstelle einer eigenständigen Transporteinrichtung 5' ein Hilfselement 5'' vorgesehen ist, und zwar am Ende einer starren Verbindung oder eines starren Armes 20, dessen anderes Ende an einer Meßeinrichtung 21 der Transporteinrichtung 5 angreift. Das Hilfselement 5'' ist beispielsweise von wenigstens einem Haftelement 13 oder aber von einem anderen Element gebildet, welches ein ortsfestes Positionieren des Hilfselementes 5'' an der Ebene 14, auf der sich das Transportelement 5 bewegt, gestattet. Vorzugsweise ist der Arm 20 in seiner Länge veränderbar ausgebildet, so daß aufgrund dieser Längenänderung sowie aufgrund des Schwenkwinkels des Armes 20 an der Meßeinrichtung 21 beim Fortschreiten der Transporteinrichtung 5 und bei fester Positionierung des Hilfselementes 5'' die jeweilige Position der Transporteinrichtung 5 relativ zu dem Hilfselement 5'' genau bestimmt werden kann. Die fortschreitende Bewegung des Transportelementes 5 erfolgt auch bei der Ausführung der Figur 7 in ähnlicher Weise wie in der Figur 5 in einzelnen, aufeinanderfolgenden Bewegungsschritten, zwischen denen jeweils bei feststehender Transporteinrichtung 5 das Hilfselement 5'' nachgeführt wird.

Werden zwei Hilfselemente 5'' mit jeweils einem eigenen Meßarm 20 verwendet, so ist ähnlich der Figur 6 eine kontinuierlich fortschreitende Bewegung der Transporteinrichtung 5 möglich.

Die in den Figuren 5 - 7 nur schematisch mit 22 bezeichnete Steuerelektronik ist ortsfest an einem geeigneten Platz vorgesehen und steht über Meßleitungen mit der jeweiligen Transporteinrichtung 5 bzw. mit der dortigen Meßeinrichtung 16 bzw. 21 in Verbindung, so daß die von diesen Meßeinrichtungen ermittelten Daten in der Steuerelektronik für die Bestimmung der Orientierung und Position der jeweiligen Transporteinrichtung 5 verarbeitet werden können und hiermit eine Steuerung der Transporteinrichtung 5 auf der gewünschten Bewegungsbahn möglich ist.

Die Erfindung wurde voranstehend an Ausführungsbeispielen beschrieben. Es versteht sich, daß zahlreiche Änderungen sowie Abwandlungen möglich sind, ohne daß dadurch der der Erfindung zugrundeliegende Erfindungsgedanke verlassen wird.

### Bezugszeichenliste

- 1: Druckzylinder
- 2: Rohrleitung
- 3: Flansch
- 4: Roboter
- 4': Hilfroboter
- 5, 5a, 5b: Transporteinrichtung
- 5', 5'': Hilfselement
- 6: Ultraschall-Meßeinrichtung
- 7: Kontroll- und Steuereinrichtung
- 8: Leitungsbündel
- 9: Träger
- 10: Stellglied
- 11: Gelenk
- 12: Hubelement
- 13: Haftelement
- 14: Untergrund
- 15: Plattform
- 16: Meßeinerichtung
- 17: Meßelement
- 18, 19: Abtaststrahl
- 20: Arm
- 21: Meßeinrichtung
- 22: Steuerelement

## Patentansprüche

1. Mobiles Transport- und/oder Handhabungssystem mit wenigstens einem Transportelement (5, 5a, 5b), welches für eine gesteuerte Bewegung entlang eines Untergrundes (14) wenigstens ein Bewegungselement (9) aufweist, mit dem die Transporteinrichtung (5) entlang des Untergrundes (14) bewegbar und an diesem fixierbar ist, dadurch gekennzeichnet, daß zur Bestimmung der Position und Orientierung der Transporteinrichtung ein Hilfselement (5', 5''), welches Mittel (13) zum Fixieren am Untergrund (14) aufweist, sowie Mittel (16, 17, 20, 21, 22) zur Bestimmung der Position und/oder Orientierung der Transporteinrichtung (5, 5a, 5b) relativ zum Hilfselement (5', 5'') vorgesehen sind, daß diese Mittel wenigstens eine Meßeinrichtung auf der Transporteinrichtung (5, 5a, 5b) und/oder auf dem Hilfselement (5', 5'') für die Messung der Position und/oder Orientierung aufweisen, und daß eine Steuerelektronik (22) vorgesehen ist, die die Transporteinrichtung (5, 5a, 5b) und/oder das Hilfselement (5', 5'') derart steuert, daß eine Bewegung der Transporteinrichtung (5, 5a, 5b) jeweils bei ortsfest am Untergrund positioniertem Hilfselement (5', 5'') erfolgt, und zwar zur Bestimmung der Position sowie der Orientierung der Transporteinrichtung (5, 5a, 5b) relativ zu dem ortsfesten Hilfselement (5', 5''), das Hilfselement (5', 5'') dann nachgeführt und erneut am Untergrund (14) fixiert wird und durch die Meßeinrichtung (16, 17, 20, 21) die neue Position des nachgeführten Hilfselementes bestimmt wird.

2. System nach Anspruch 1, dadurch gekennzeichnet, daß die neue Position des nachgeführten Hilfselementes (5', 5'') jeweils aus der Position, die dann die Transporteinrichtung (5, 5a, 5b) oder ein weiteres Hilfselement (5', 5'') aufweist, bestimmt wird.

3. System nach Anspruch 1 oder 2, dadurch gekennzeichnet, daß für die Transporteinrichtung (5, 5a, 5b) ein Hilfselement (5', 5'') vorgesehen ist, und daß die Transporteinrichtung (5, 5a, 5b) und das Hilfselement (5', 5'') derart durch die Steuerelektronik (22) steuerbar sind, daß in einer schrittweisen fortschreitenden Bewegung bei jedem Schritt zunächst in einer Bewegungspahse die Bewegung der Transporteinrichtung (5, 5a, 5b) relativ zu dem ortfest am Untergrund (14) vorgesehenen Hilfselement (5', 5'') bei Messung der Position sowie Orientierung und anschließend in einer Nachführphase bei fest am Untergrund (14) positionierter Transporteinrichtung ein Nachführen und erneutes Fixieren des nachgeführten Hilfselementes (5', 5'') am Untergrund (14) erfolgen, wobei aus der Position und Orientierung der Transporteinrichtung (5, 5a, 5b) am Ende der Nachführphase die neue Position und Orientierung des nachgeführten Hilfselementes (5', 5'') bestimmt werden.

4. System nach Anspruch 1 oder 2, dadurch gekennzeichnet, daß der Transporteinrichtung (5, 5a, 5b) wenigstens zwei Hilfselemente (5', 5'') zugeordnet sind, und daß diese durch die Steuerelektronik (22) derart steuerbar sind, daß bei der fortschreitenden Bewegung der Transporteinrichtung (5, 5a, 5b) jeweils ein Hilfselement (5', 5'') ortsfest am Untergrund (14) vorgesehen ist und daß nach dem Nachführen des anderen Hilfselementes (5', 5'') aufgrund der augenblicklichen Position des einen Hilfselementes (5', 5'') und/oder der Transporteinrichtung (5) die Position des nachgeführten anderen Hilfselementes (5', 5'') bestimmt und die Meßeinrichtung dann für die weitere Bestimmung der Position und/oder Orientierung von dem einen Hilfselement auf das andere Hilfselement umschaltet und das eine Hilfselement nachgeführt wird.

5. System nach einem der Ansprüche 1 - 4, dadurch gekennzeichnet,
daß das wenigstens eine Hilfselement eine weitere Transporteinrichtung (5') ist, und/oder daß das wenigstens eine Hilfselement (5'') über wenigstens einem Arm oder Ausleger (20) beweglich an der Transporteinrichtung (5) vorgesehen ist.

6. System nach einem der Ansprüche 1 - 5, dadurch gekennzeichnet, daß die Mittel zur Messung und/oder Bestimmung der Position und/oder Orientierung wenigstens eine optische, akustische oder mechanische Meßeinrichtung (16, 21) aufweisen, wobei die Meßeinrichtung beispielsweise eine mit Laser-Licht und/oder mit Ultraschall arbeitende Meßeinrichtung und/oder eine Meßeinrichtung mit wenigstens einer Video-Kamera ist.

7. System nach einem der Ansprüche 1 - 6, dadurch gekennzeichnet, daß die Transporteinrichtung (5) oder die das Hilfselement bildende zusätzliche Transporteinrichtung (5') mehrere Schreitelemente (9) aufweist, die jeweils ein Stand- und/oder Fußelement besitzen, welches zum Anlegen und Abheben an den bzw. von dem Untergrund (14) durch ein Hubelement (12) in einer ersten Achsrichtung absenkbar bzw. abhebbar ist, daß zwischen den Schreitelementen (9) wirkende Stellglieder (10) zur Erzeugung jeweils einer linearen Relativbewegung zwischen zwei Schreitelementen (9) innerhalb eines vorgegebenen Bewegunshubes in einer Bewegungsachse vorgesehen sind, daß zwei über jeweils wenigstens ein Stellglied (10) miteinander verbundene Schreitelemente (9) beidseitig von einer gedachten, die Bewegungsachse rechtwinklig schneidenden Mittelebene (M) angeordnet und durch das Hubelement (12) in Richtung dieser Achse aufeinanderzu und voneinanderweg bewegbar sind, und daß wenigstens drei Schreitelemente (9) vorgesehen sind, die über jeweils wenigstens ein Stellglied (10) zu einer polygonartigen Anordnung miteinander verbunden sind.

8. System nach einem der Ansprüche 1 - 7, dadurch gekennzeichnet,
daß jedes Stellgleid (10) die beiden Schreitelemente (9) arm- oder lenkerartig miteinander verbindet,
und/oder
daß das Stellglied (10) zumindest an einem Ende an wenigstens einem Schreitelement (9) über eine mindestens ein Gelenk (11) aufweisende Gelenkanordnung um wenigstens eine Achse schwenkbar angelenkt ist,
und/oder
daß das Stellglied (10) über die Gelenkanordnung (11) um wenigstens zwei, vorzugsweise um drei Raumachsen schwenkbar an dem Schreitelement (9) angelenkt ist,
wobei beispielsweise das Stellglied (10) an beiden Schreitelementen (9), zwischen denen dieses Stellglied (10) wirkt, über die Gelenkanordnung angelenkt ist.

9. System nach einem der Ansprüche 1 - 8, dadurch gekennzeichnet, daß in der polygonartigen Anordnung Stellglieder (10) und Schreitelemente (9) einander abwechseln,
wobei beispielsweise die Schreitelemente (9) jeweils den Bereich der Ecken der polygonartigen Anordnung bilden,
und/oder
wobei beispielsweise vier oder mehr als vier Schreitelemente (9) und jeweils wenigstens ein zwischen zwei Schreitelementen (9) wirkendes Stellglied vorgesehen sind (10).

10. System nach einem der Ansprüche 1 - 9, dadurch gekennzeichnet,
daß die Anzahl der Stellglieder (9) gleich der Anzahl der Schreitelemente (9) oder einem Vielfachen hiervon ist,
und/oder
daß die Stellglieder (10) und/oder die Hubelemente (12) durch eine Steuereinrichtung (7) einzeln oder in Gruppen individuell ansteuerbar sind.

11. System nach einem der Ansprüche 1 - 10, dadurch gekennzeichnet, daß an ihr ein Träger (15) vorgesehen ist, der mittels einer Schlittenanordnung in wenigstens einer Raumachse, vorzugsweise in zwei senkrecht zueinander verlaufenden Raumachsen (X, Y), kontinuierlich oder in Schritten bewegbar ist, die um ein Vielfaches kleiner sind als der maximale Bewegungshub des wenigstens einen Stellgliedes (10), wobei beispielsweise der maximale Bewegungshub des Schlittens gleich oder etwas größer ist als der maximale Bewegungshub des wenigstens einen Stellgliedes (10).

12. System nach einem der Ansprüche 1 - 11, dadurch gekennzeichnet,
daß die Stand- oder Halteelemente von Vakuum-Saugern und/oder Elektromagneten gebildete Hafteinrichtungen sind,
und/oder
daß die Hubelemente (12) und/oder die Stellglieder (10) elektrische, pneumatische oder hydraulische Hubelemente oder Stellglieder sind.

13. System nach einem der Ansprüche 1 - 12, gekennzeichnet durch seine Ausbildung als Teil eines Roboters (4) mit einem Arbeitsgerät, vorzugsweise mit einer Meß- oder Prüfeinrichtung (6), und/oder durch seine Ausbildung als Hilfsroboter (4') zum Halten und Nachführen von Leitungen oder Leitungsbündeln eines Arbeitsgerätes (6) an eine Kontroll- und/oder Steuereinrichtung (7).

14. Verfahren zur Steuerung der Bewegung eines mobilen Transport- und/oder Handhabungssystems mit wenigstens einem Transportelement (5, 5a, 5b), welches für eine gesteuerte Bewegung entlang eines Untergrundes (14) wenigstens ein Bewegungselement (9) aufweist, mit dem die Transporteinrichtung (5) entlang des Untergrundes (14) bewegbar und an diesem fixierbar ist, dadurch gekennzeichnet, daß die Bestimmung der Position und Orientierung der Transporteinrichtung mit wenigstens einem Hilfselement (5', 5''), welches Mittel (13) zum Fixieren am Untergrund (14) aufweist, dadurch erfolgt, daß die Position und/oder Orientierung der Transporteinrichtung (5, 5a, 5b) relativ zum Hilfselement (5', 5'') unter Verwendung wenigstens einer Meßeinrichtung auf der Transporteinrichtung (5, 5a, 5b) und/oder auf dem Hilfselement (5', 5'') erfaßt und/oder bestimmt wird, wobei die Transporteinrichtung (5', 5'') derart bewegt werden, daß eine Bewegung der Transporteinrichtung (5, 5a, 5b) jeweils bei ortsfest am Untergrund positioniertem Hilfselement (5', 5'') erfolgt, und zwar bei Bestimmung der Position sowie der Orientierung der Transporteinrichtung (5, 5a, 5b) relativ zu dem ortsfesten Hilfselement (5', 5''), das Hilfselement (5', 5'') dann nachgeführt und erneut am Untergrund (14) fixiert wird und durch die Meßeinrichtung (16, 17, 20, 21) die neue Position des nachgeführten Hilfselementes bestimmt wird,
wobei beispielsweise die neue Position des nachgeführten Hilfselementes (5', 5'') jeweils aus der Position, die dann die Transporteinrichtung (5, 5a, 5b) oder ein weiteres Hilfselement (5', 5'') aufweist, bestimmt wird.

15. Verfahren nach Anspruch 14, dadurch gekennzeichnet, daß für die Transporteinrichtung (5, 5a, 5b) ein Hilfselement (5', 5'') verwendet wird, und daß die Transporteinrichtung (5, 5a, 5b) und das Hilfselement (5', 5'') derart gesteuert werden, daß in einer schrittweisen fortschreitenden Bewegung bei jedem Schritt zunächst in einer Bewegungsphase die Bewegung der Transporteinrichtung (5, 5a, 5b) relativ zu dem ortsfest am Untergrund (14) vorgesehenen Hilfselement (5', 5'') bei Messung der Position sowie Orientierung und anschließend in einer Nachführphase bei fest am Untergrund (14) positionierter Transporteinrichtung ein Nachführen und erneutes Fixieren des nachgeführten Hilfselementes (5', 5'') am Untergrund (14) erfolgt, wobei aus der Position und Orientierung der Transporteinrichtung (5, 5a, 5b) am Ende der Nachführphase die neue Position und Orientierung des nachgeführten Hilfselementes (5', 5'') bestimmt werden.

16. Verfahren nach Anspruch 14 oder 15, dadurch gekennzeichnet, daß der Transporteinrichtung (5, 5a, 5b) wenigstens zwei Hilfselemente (5', 5'') zugeordnet sind, und daß diese durch die Steuerelektronik (22) derart gesteuert werden, daß bei der fortschreitenden Bewegung der Transporteinrichtung (5, 5a, 5b) jeweils ein Hilfselement (5', 5'') ortsfest am Untergrund (14) vorgesehen ist und daß nach dem Nachführen des anderen Hilfselementes (5', 5'') aufgrund der augenblicklichen Position des einen Hilfselementes (5', 5'') und/oder der Transporteinrichtung (5) die Position des nachgeführten anderen Hilfselementes (5', 5'') bestimmt und die Meßeinrichtung dann für die weitere Bestimmung der Position und/oder Orientierung von dem einen Hilfselement auf das andere Hilfselement umschaltet und das eine Hilfselement nachgeführt wird.

17. Verfahren nach einem der Ansprüche 14 - 16, dadurch gekennzeichnet,
daß als Hilfselement wenigstens eine weitere Transporteinrichtung (5') verwendet wird,
und/oder
daß als Hilfselement (5'') wenigstens ein Arm oder Ausleger (20) verwendet wird, der beweglich an der Transporteinrichtung (5) vorgesehen ist, und/oder
daß zur Messung und/oder Bestimmung der Position und/oder Orientierung wenigstens eine akustische, mechanische oder optische Meßeinrichtung (16, 21), beispielsweise eine mit Laser-Licht und/oder mit Ultraschall arbeitende Meßeinrichtung und/oder wenigstens eine Video-Kamera verwendet wird.

## Claims

1. Mobile conveyor and/or handling system with at least one conveyor element (5, 5a, 5b), which, for a controlled movement along a base (14), has at least one movement element (9) with which the conveyor device (5) can be moved along the base (14) and fixed on it,
**characterized in that**
to determine the position and orientation of the conveyor device, an auxiliary element (5', 5'') - which has means (13) for fixing on the base (14) - as well as means (16, 17, 20, 21, 22) for determining the position and/or orientation of the conveyor device (5, 5a, 5b) relative to the auxiliary element (5', 5'') are provided; that these means have at least one measuring device on the conveyor device (5, 5a, 5b) and/or on the auxiliary element (5', 5'') for measuring the position and/or orientation; and that an electronic control unit (22) is envisaged which controls the conveyor device (5, 5a, 5b) and/or the auxiliary element (5', 5'') in such a way that any movement of the conveyor device (5, 5a, 5b) takes place, in each case, with the auxiliary element (5', 5'') positioned stationary on the base, and namely for determination of the position as well as of the orientation of the conveyor device (5, 5a, 5b) relative to the stationary auxiliary element (5', 5''), the auxiliary element (5', 5'') is then trailed along and once again fixed on the base (14), and the new position of the auxiliary element which has been trailed along is then determined by the measuring device (16, 17, 20, 21).

2. System in accordance with claim 1, characterized in that the new position of the trailing auxiliary element (5', 5'') is determined, in each case, from the position which is then shown by the conveyor device (5, 5a, 5b) or a further auxiliary element (5', 5'').

3. System in accordance with claim 1 or 2, characterized in that an auxiliary element (5', 5'') is envisaged for the conveyor device (5, 5a, 5b), and that the conveyor device (5, 5a, 5b) and the auxiliary element (5', 5'') can be controlled by the electronic control unit (22) in such a way that in a step-wise progressive movement, for each step, initially in one movement phase, movement of the conveyor device (5, 5a, 5b) relative to the auxiliary element (5', 5'') provided - stationary - on the base (14), with measurement of the position and orientation, and subsequently in a trailing phase with the conveyor device positioned stationary on the base (14), trailing and renewed fixing of the trailing auxiliary element (5', 5'') on the base takes place, whereby the new position and orientation of the trailing auxiliary element (5', 5'') are determined from the position and orientation of the conveyor device (5, 5a, 5b) at the end of the trailing phase.

4. System in accordance with claim 1 or 2, characterized in that the conveyor device (5, 5a, 5b) has at least two auxiliary elements (5', 5'') assigned to it, and that these can be controlled by the electronic control unit (22) in such a way that during the progressive movement of the conveyor device (5, 5a, 5b) in each case one auxiliary element (5', 5'') is provided - stationary - on the base (14), and that after the other auxiliary element (5', 5'') has been trailed behind, on the basis of the current position of the one auxiliary element (5', 5'') and/or of the conveyor device (5), the position of the other, trailing, auxiliary element (5', 5'') is determined, and the measuring device then switches over for further determination of position and/or orientation from the one auxiliary element to the other auxiliary element, and the one auxiliary element is trailed along.

5. System in accordance with one of the claims 1-4, characterized in that at least one auxiliary element is a further conveyor device (5'), and/or that the at least one auxiliary element (5'') is provided on the conveyor device (5) so as to be movable via at least one arm or jib (20).

6. System in accordance with one of the claims 1-5, characterized in that the means of measurement and/or determination of the position and/or orientation have at least one optical, acoustic or mechanical measuring device (16, 21), with the measuring device being for example a measuring device working with laser light and/or with ultrasound and/or a measuring device with at least one video camera.

7. System in accordance with one of the claims 1-6, characterized in that the conveyor device (5) or the additional conveyor device (5') forming the auxiliary element has several advancing elements (9) which in each case have a stand- and/or footing element which, for the purpose of placing onto or lifting from the base (14), can be lowered or raised in a first axial direction via a hoisting element (12); that actuator elements (10) acting between the advancing elements (9) are provided to create in each case one linear relative movement between two advancing elements (9) within a pre-set movement stroke in a movement axis; that two advancing elements (9) connected to one another via - in each case - at least one actuator element (10) are arranged on both sides of an imaginary central plane (M) which cuts across the movement axis at a right angle, and can be moved by the hoisting element (12) towards one another and away from one another in the direction of this axis; and that at least three advancing elements (9) are provided which are connected with one another in each case via at least one actuator element (10) to form a polygonal arrangement.

8. System in accordance with one of the claims 1-7, characterized in that each actuator element (10) connects the two advancing elements (9) in the manner of an arm or connecting rod,
and/or
that the actuator element (10) is coupled on at least one end, on at least one advancing element (9), via a joint arrangement which has at least one joint (11), in such a way that it can pivot around at least one axis,
and/or
that the actuator element (10) is coupled to the advancing element (9) via the joint arrangement (11), so that it can be pivoted around at least two, preferably three spatial axes,
with for example the actuator element (10) on both advancing elements (9), between which this actuator element (10) acts, being coupled via the joint arrangement.

9. System in accordance with one of the claims 1-8, characterized in that in the polygonal arrangement, actuator elements (10) and advancing elements (9) alternate with one another,
with for example the advancing elements (9) forming, in each case, the area of the corners of the polygonal arrangement,
and/or
with for example four or more than four advancing elements (9) and in each case at least one actuator element acting between two advancing elements (9) being envisaged (10).

10. System in accordance with one of the claims 1-9, characterized in that the number of actuator elements (9) [*sic*] is equal to the number of advancing elements (9) or a multiple thereof,
and/or
that the actuator elements (10) and/or the hoisting elements (12) can be actuated individually via a control device (7) singly or in groups.

11. System in accordance with one of the claims 1-10, characterized in that on it, a carrier (15) is envisaged, which can be moved by means of a carriage arrangement in at least one spatial axis, preferably in two spatial axes running perpendicular to one another (X, Y), continuously or in steps, which are many times smaller than the maximum movement stroke of the at least one actuator element (10), with for example the maximum movement stroke of the carriage being equal to or somewhat larger than the maximum stroke of the at least one actuator element (10).

12. System in accordance with one of the claims 1-11, characterized in that the stand- or holding elements are adhesion devices formed of vacuum suckers and/or electromagnets,
and/or
that the two hoisting elements (12) and/or the actuator elements (10) are electrical, pneumatic or hydraulic hoisting elements or actuator elements.

13. System in accordance with one of the claims 1-12, characterized through its design as part of a robot (4) with a work device, preferably with a measuring- or testing device (6), and/or through its design as an auxiliary robot (4') for holding or trailing along leads or lead bundles of a work device (6) to a monitoring- and/or control device (7).

14. Process for controlling the movement of a mobile conveyor- and/or handling system with at least one conveyor element (5, 5a, 5b) which, for a controlled movement along a base (14), has at least one movement element (9), with which the conveyor device (5) can be moved along the base (14) and can be fixed thereon, characterized in that the determination of the position and orientation of the conveyor device with at least one auxiliary element (5', 5''), which has means (13) for fixing onto the base (14), takes place through the fact that the position and/or orientation of the conveyor device (5, 5a, 5b) relative to the auxiliary element (5', 5'') is recorded and/or determined using at least one measuring device on the conveyor device (5, 5a, 5b) and/or on the auxiliary element (5', 5''), whereby the conveyor device (5', 5'') are [*sic*] moved in such a way that a movement of the conveyor device (5, 5a, 5b) takes place in each case with the auxiliary element (5', 5'') being positioned stationary on the base, and in fact in the case of determination of the position as well as of the orientation of the conveyor device (5, 5a, 5b) relative to the stationary auxiliary element (5', 5''), the auxiliary element (5', 5'') is then trailed along and fixed once again to the base (14), and the new position of the trailing auxiliary element is determined by the measuring device (16, 17, 20, 21),
whereby for example the new position of the trailing auxiliary element (5', 5'') is determined in each case from the position which the conveyor device (5, 5a, 5b) or a further auxiliary element (5', 5'') then shows.

15. Procedure in accordance with claim 14, characterized in that an auxiliary element (5', 5'') is used for the conveyor device (5, 5a, 5b), and that the conveyor device (5, 5a, 5b) and the auxiliary element (5', 5'') are controlled in such a way that in a step-wise progressive movement, for each step, initially in one movement phase movement of the conveyor device (5, 5a, 5b) relative to the auxiliary element (5', 5'') provided - stationary - on the base (14), with measurement of the position as well as orientation, and subsequently in a trailing phase with the conveyor device positioned stationary on the base (14), trailing along and renewed fixing of the trailing auxiliary element (5', 5'') on the base takes place, whereby from the position and orientation of the conveyor device (5, 5a, 5b) at the end of the trailing phase, the new position and orientation of the auxiliary element (5', 5'') which has been trailed along are determined.

16. Procedure in accordance with claim 14 or 15, characterized in that at least two auxiliary elements (5', 5'') are assigned to the conveyor device (5, 5a, 5b), and that these are controlled by the electronic control unit (22) in such a way that with the progressive movement of the conveyor device (5, 5a, 5b), in each case one auxiliary element (5', 5'') is provided - stationary - on the base (14), and that after the other auxiliary element (5', 5'') has been trailed along, on the basis of the current position of the one auxiliary element (5', 5'') and/or conveyor device (5), the position of the other, trailing, auxiliary element (5', 5'') is determined, and the measuring device then switches over for the further determination of the position and/or orientation from the one auxiliary element to the other auxiliary element, and the one auxiliary element is then trailed along.

17. Procedure in accordance with one of the claims 14-16, characterized in that as an auxiliary element, at least one further conveyor device (5') is used,
and/or
that as an auxiliary element (5''), at least one arm or jib (20) is used, which is provided so as to be movable on the conveyor device (5),
and/or
that for the measurement and/or determination of the position and/or orientation, at least one acoustic, mechanical or optical measuring device (16, 21), for example a measuring device working with laser light and/or with ultrasound, and/or at least one video camera, is used.

## Revendications

1. Système mobile de transport et/ou de manutention comprenant au moins un élément de transport (5, 5a, 5b) qui présente au moins un élément de déplacement (9) permettant un mouvement modulé le long d'une surface de fond (14) et grâce auquel le dispositif de transport (5) peut être déplacé le long de la surface de fond (14) et être fixé sur celle-ci, caractérisé en ce que pour déterminer la position et pour l'orientation du dispositif de transport sont prévus un élément auxiliaire (5', 5''), présentant des moyens (13) pour la fixation sur la surface de fond (14), ainsi que des moyens (16, 17, 20, 21, 22) destinés à déterminer la position et/ou destinés à l'orientation du dispositif de transport (5, 5a, 5b) par rapport à l'élément auxiliaire (5', 5''), en ce que ces moyens présentent au moins un dispositif de calcul disposé sur le dispositif de transport (5, 5a, 5b) et/ou sur l'élément auxiliaire pour le calcul de la position et/ou pour l'orientation, et en ce qu'il est prévu un système de commande électronique (22) commandant le dispositif de transport (5, 5a, 5b) et/ou l'élément auxiliaire (5', 5'') de telle sorte qu'il en résulte un mouvement du dispositif de transport (5, 5a, 5b) lorsque l'élément auxiliaire est respectivement positionné à demeure sur la surface de fond, et donc lors de la détermination de la position de même que lors de l'orientation du dispositif de transport (5, 5a, 5b) par rapport à l'élément auxiliaire fixe (5', 5''), que l'élément auxiliaire soit alors orienté et à nouveau fixé sur la surface de fond (14) et que la nouvelle position de l'élément auxiliaire orienté soit déterminée par le dispositif de mesure (16, 17, 20, 21).

2. Système suivant la revendication 1, caractérisé en ce que la nouvelle position de l'élément auxiliaire orienté (5', 5'') est respectivement déterminée à partir de la position qu'occupe le dispositif de transport (5, 5a, 5b) ou un autre élément auxiliaire (5', 5'').

3. Système suivant la revendication 1 ou 2, caractérisé en ce qu'il est prévu un élément auxiliaire (5', 5'') pour le dispositif de transport (5, 5a, 5b) et en ce que le dispositif de transport (5, 5a, 5b) et l'élément auxiliaire (5', 5'') peuvent être commandés par le système de commande électronique (22) de telle sorte que lors d'un mouvement de translation progressif, il en résulte, lors de chaque étape, tout d'abord dans une phase de déplacement du dispositif de transport (5, 5a, 5b) par rapport à l'élément auxiliaire (5', 5'') monté à demeure sur la surface de fond (14) lors du calcul de la position et lors de l'orientation et par la suite dans une phase d'orientation lorsque le dispositif de transport est positionné à demeure sur la surface de fond (14), une orientation et une nouvelle fixation de l'élément auxiliaire orienté (5', 5'') sur la surface de fond (14), la nouvelle position et orientation de l'élément auxiliaire orienté (5', 5'') étant déterminée à la fin de la phase d'orientation à partir de la position et de l'orientation du dispositif de transport (5, 5a, 5b).

4. Système suivant la revendication 1 ou 2, caractérisé en ce qu'au dispositif de transport (5, 5a, 5b) sont adjoints au moins deux éléments auxiliaires (5', 5'') et en ce que ceux-ci peuvent être commandés par le système de commande électronique (22) de telle sorte que lors d'un mouvement progressif du dispositif de transport (5, 5a, 5b) un élément auxiliaire (5', 5'') soit respectivement monté à demeure sur la surface de fond (14) et que après l'orientation de l'autre élément auxiliaire (5', 5'') la position de l'autre élément auxiliaire suivi (5', 5'') et/ou du dispositif de transport (5) soit déterminée par la position actuelle d'un élément auxiliaire (5', 5'') et que le dispositif de calcul soit alors commuté d'un élément auxiliaire à l'autre élément auxiliaire pour la détermination suivante de la position et/ou l'orientation et qu'un élément auxiliaire soit orienté.

5. Système suivant l'une quelconque des revendications 1 à 4, caractérisé en ce qu'au moins un élément auxiliaire est un autre dispositif de transport (5') et/ou en ce que le au moins un élément auxiliaire (5'') est prévu mobile sur le dispositif de transport (5) par l'intermédiaire d'au moins un bras ou avant-bras (20).

6. Système suivant l'une quelconque des revendications 1 à 5, caractérisé en ce que les moyens destinés à calculer et/ou à déterminer la position et/ou destinés à l'orientation présentent au moins un dispositif de mesure optique, acoustique ou mécanique (16, 21), le dispositif de mesure étant par exemple un dispositif de mesure fonctionnant à la lumière laser et/ou aux rayons ultra-violets et/ou un dispositif avec au moins une caméra-vidéo.

7. Système suivant l'une quelconque des revendications 1 à 6, caractérisé en ce que le dispositif de transport (5) ou le dispositif de transport supplémentaire (5') formant l'élément auxiliaire présente plusieurs éléments de transition (9) comportant un élément de positionnement et/ou un pied qui peut être abaissé ou soulevé dans une première direction d'axe pour être amené contre la surface de fond (14) ou écartée de celle-ci par un élément de levage (12), en ce que des éléments de réglage (10) agissant entre les éléments de transition (9) sont prévus pour générer respectivement un mouvement relatif linéaire entre deux éléments de transition (9) au cours d'un soulèvement prédéterminé dans un axe de déplacement, en ce que deux éléments de transition (9) reliés entre eux respectivement par au moins un élément de réglage (10) sont disposés de part et d'autre d'un plan médian (M) imaginaire coupant perpendiculairement l'axe de déplacement et peuvent être rapprochés l'un de l'autre ou écartés l'un de l'autre par l'élément de levage (12) dans la direction de cet axe, et en ce qu'au moins trois éléments de transition (9) sont prévus, reliés les uns aux autres sous la forme d'un polygone par l'intermédiaire d'au moins un élément de réglage (10).

8. Système suivant l'une quelconque des revendications 1 à 7, caractérisé en ce que chaque élément de réglage (10) relie entre eux les deux éléments de transition (9) par des bras ou des articulations, et /ou en ce que l'élément de réglage (10) est articulé par au moins une extrémité à au moins un élément de transition (9) par un assemblage articulé présentant au moins une articulation (11), de manière à pouvoir pivoter autour d'au moins un axe, et/ou en ce que l'élément de réglage (10) est articulé par l'intermédiaire de l'assemblage articulé (11) de manière à pouvoir pivoter autour d'au moins deux axes spatiaux, de préférence trois axes spatiaux, l'élément de réglage (10), par exemple, étant articulé aux deux éléments de transition (9), entre lesquels agit cet élément de réglage (10), par l'intermédiaire de cet assemblage articulé.

9. Système suivant l'une quelconque des revendications 1 à 8, caractérisé en ce que éléments de réglage (10) et éléments de transition (9) alternent dans l'agencement polygonal, les éléments de transition (9) formant par exemple respectivement la zone des coins de l'agencement polygonal, et/ou quatre ou plus de quatre éléments de transition (9) et respectivement au moins un élément de réglage (10) agissant entre deux éléments de transition (9) étant par exemple prévus.

10. Système suivant l'une quelconque des revendications 1 à 9, caractérisé en ce que le nombre d'éléments de réglage (9) est égal au nombre d'éléments de transition (9) ou est un multiple de celui-ci, et/ou en ce que les éléments de réglage (10) et/ou les éléments de levage (12) peuvent être commandés individuellement ou en groupe par un dispositif de commande (7).

11. Système suivant l'une quelconque des revendications 1 à 10, caractérisé en ce qu'un support (15) est prévu sur celui-ci, lequel peut être déplacé en continu ou par étapes au moyen d'un dispositif à coulisseau suivant au moins un axe spatial, de préférence suivant deux axes spatiaux (X, Y) perpendiculaires l'un à l'autre, inférieurs d'un nombre multiple au soulèvement maximum de l'au moins un élément de réglage (10), le soulèvement maximum du coulisseau étant par exemple égal ou légèrement supérieur au soulèvement maximum de l'au moins un élément de réglage (10).

12. Système suivant l'une quelconque des revendications 1 à 11, caractérisé en ce que les éléments de positionnement ou de retenue d'appareils à vide et/ou d'électro-aimants sont des dispositifs d'adhérence mis en forme, et/ou en ce que les éléments de levage (12) et/ou les éléments de réglage (10) sont des éléments de levage ou des éléments de réglage électriques, pneumatiques ou hydrauliques.

13. Système suivant l'une quelconque des revendications 1 à 12, caractérisé par sa configuration en tant que partie d'un robot (4) composé d'un outil, de préférence un dispositif de mesure ou d'essai (6), et/ou par sa configuration en tant que robot auxiliaire (4') pour le maintien ou l'orientation de conducteurs ou de faisceaux de conducteurs d'un outil (6) sur un dispositif de contrôle et/ou de commande (7).

14. Procédé permettant de commander le mouvement d'un système mobile de transport et/ou de manutention comprenant au moins un élément de transport (5, 5a, 5b) qui présente au moins un élément de déplacement (9) permettant un mouvement modulé le long d'une surface de fond (14) et grâce auquel le dispositif de transport (5) peut être déplacé le long de la surface de fond (14) et être fixé sur celle-ci, caractérisé en ce que pour déterminer la position et pour l'orientation du dispositif de transport sont prévus un élément auxiliaire (5', 5''), présentant des moyens (13) pour la fixation sur la surface de fond (14), réalisé par le fait que la position et/ou l'orientation du dispositif de transport (5, 5a, 5b) par rapport à l'élément auxiliaire (5', 5'') est détectée et/ou déterminée par l'utilisation d'au moins un dispositif de calcul disposé sur le dispositif de transport (5, 5a, 5b) et/ou sur l'élément auxiliaire (5', 5''), le dispositif de transport (5, 5a, 5b) étant déplacé de telle sorte qu'il en résulte un mouvement du dispositif de transport (5, 5a, 5b) lorsque l'élément auxiliaire est respectivement positionné à demeure sur la surface de fond, et donc lors de la détermination de la position de même que lors de l'orientation du dispositif de transport (5, 5a, 5b) par rapport à l'élément auxiliaire fixe (5', 5''), que l'élément auxiliaire soit alors orienté et à nouveau fixé sur la surface de fond (14) et que la nouvelle position de l'élément auxiliaire orienté soit déterminée par le dispositif de mesure (16, 17, 20, 21), la nouvelle position de l'élément auxiliaire orienté (5', 5'') étant respectivement déterminée à partir de la position qu'occupe alors le dispositif de transport (5, 5a, 5b) ou un autre élément auxiliaire (5', 5'').

15. Procédé suivant la revendication 14, caractérisé en ce qu'un élément auxiliaire (5', 5'') est utilisé pour le dispositif de transport (5, 5a, 5b) et en ce que le dispositif de transport (5, 5a, 5b) et l'élément auxiliaire (5', 5'') peuvent être commandés de telle sorte que lors d'un mouvement de translation progressif, il en résulte, lors de chaque étape, tout d'abord dans une phase de déplacement du dispositif de transport (5, 5a, 5b) par rapport à l'élément auxiliaire (5', 5'') monté à demeure sur la surface de fond (14) lors du calcul de la position et lors de l'orientation et par la suite dans une phase d'orientation lorsque le dispositif de transport est positionné à demeure sur la surface de fond (14), une orientation et une nouvelle fixation de l'élément auxiliaire orienté (5', 5'') sur la surface de fond (14), la nouvelle position et orientation de l'élément auxiliaire orienté (5', 5'') étant déterminée à la fin de la phase d'orientation à partir de la position et de l'orientation du dispositif de transport (5, 5a, 5b).

16. Procédé suivant la revendication 14 ou 15, caractérisé en ce qu'au dispositif de transport (5, 5a, 5b) sont adjoints au moins deux éléments auxiliaires (5', 5'') et en ce que ceux-ci peuvent être commandés par le système de commande électronique (22) de telle sorte que lors d'un mouvement progressif du dispositif de transport (5, 5a, 5b) un élément auxiliaire (5', 5'') soit respectivement monté à demeure sur la surface de fond (14) et que après l'orientation de l'autre élément auxiliaire (5', 5'') la position de l'autre élément auxiliaire orienté (5', 5'') et/ou du dispositif de transport (5) soit déterminée par la position actuelle d'un élément auxiliaire (5', 5'') et que le dispositif de mesure soit alors commuté d'un élément auxiliaire à l'autre élément auxiliaire pour la détermination suivante de la position et/ou l'orientation et qu'un élément auxiliaire soit orienté.

17. Procédé suivant l'une quelconque des revendications 14 à 16, caractérisé en ce qu'au moins un autre dispositif de transport (5') est utilisé comme élément auxiliaire et/ou en ce qu'au moins un bras ou avant-bras (20) est utilisé comme élément auxiliaire (5'') et est prévu mobile sur le dispositif de transport (5), et/ou en ce que pour calculer et/ou déterminer la position et/ou pour l'orientation on utilise au moins un dispositif de mesure optique, acoustique ou mécanique (16, 21), par exemple un dispositif de mesure fonctionnant à la lumière laser et/ou aux rayons ultra-violets et/ou au moins une caméra-vidéo.
